# EUROPÄISCHE PATENTSCHRIFT

(11) **EP 0 850 822 B1**
(45) Veröffentlichungstag und Bekanntmachung des Hinweises auf die Patenterteilung: **29.01.2003**
(21) Anmeldenummer: 97120909.3
(22) Anmeldetag: 28.11.1997
(51) Int. Cl.: B62D 61/08

(54) **Behindertengerechter selbstfahrender Magazinwagen**
Disabled person's automotive shopping cart
Chariot d'achat automobile pour invalide

(30) Priorität: 27.12.1996 DE 29622458 U
(43) Veröffentlichungstag der Anmeldung: 01.07.1998
(73) Patentinhaber: EXPRESSO DEUTSCHLAND TRANSPORTGERÄTE GmbH, D-34123 Kassel (DE)
(72) Erfinder: Kratzenberg, Wolfgang, 34270 Schauenburg (DE); Stein, Siegfried, 34246 Vellmar (DE)
(74) Vertreter: Schön, Theodor, Patent- und Zivilingenieur

(56) Entgegenhaltungen:
- EP-A- 0 044 773
- WO-A-93/14698
- FR-A- 2 307 690
- US-A- 3 043 389
- US-A- 3 481 417
- US-A- 3 524 512

## Beschreibung

Die Erfindung bezieht sich auf einen behindertengerechten selbstfahrenden Magazinwagen gemäß dem Oberbegriff des Anspruches 1.

Ein allerdings, zumindest mangels Ladefläche nicht als Magazinwagen verwendbarer Wagen der im Oberbegriff des Anspruches 1 angegebenen Gattung ist aus der US-PS 3 481 417 bekannt. Als Magazinwagen ist dieser Wagen ferner auch aus dem Grunde nicht wirtschaftlich einsetzbar, weil hinsichtlich der Auslegung der Steuerung der Antriebsmotoren seiner antreibbaren Hinterräder keine Maßnahmen getroffen sind, die eine Aufrechterhaltung der Fahrstabilität eines mit Nutzlast schwer beladenen Fahrzeuges auch in engeren Kurven bei weniger erfahrenem Fahrzeugführer ermöglichen würde.

Aus den gleichen Gründen ist auch nach den Vorschlägen gemäß der EP-OS 0 044 773 gestaltetes Fahrzeug nicht ohne grundlegende Abänderungen für den Einsatz als Magazinwagen geeignet.
Herkömmliche Magazinwagen, wie sie in der Regel zum Sammeltransport einer großen Anzahl kleinerer Gegenstände oder aber zum Einzeltransport schwerer Gegenstände eingesetzt werden, zeichnen sich in einer ersten gebräuchlichen Ausführungsform in der Hauptsache dadurch aus, daß sie durch eine mitgehende Bedienungsperson von Hand bewegt und gelenkt werden müssen In einer verbesserten Ausführungsform sind solche Magazinwagen selbstfahrend gestaltet und mit einem eigenständigen, insbesondere einem elektrischen Antrieb ausgestattet, müssen aber trotzdem durch eine mitgehende Bedienungsperson von Hand gelenkt werden. Soweit solche Magazinwagen dann mit starren Achsen und nicht lenkbaren Rädern ausgestattet sind bedarf es zum Manövrieren solcher Magazinwagen unter den räumlich meist sehr beengten Verhältnissen von Magazinen einer nicht unerheblichen Anstrengung der Bedienungsperson. Dazu kommt noch, daß ein beladener Magazinwagen üblicherweise ein beträchtliches Gewicht besitzt und daher auch das Abbremsen bzw. Anhalten des Magazinwagens schwierig bzw. nur mit einem entsprechenden Kraftaufwand der Bedienungsperson möglich ist. Sofern die Magazinwagen auch mit einer Bremseinrichtung ausgestattet sind bereitet es in manchen Fällen Schwierigkeiten die Bremseinrichtung rechtzeitig zu aktivieren, insbesondere dann wenn sich die Bedienungsperson zwischen dem in Bewegung befindlichen Magazinwagen und einem festen Hindernis, beispielsweise einer Wand befindet. Für eine Handhabung durch, insbesondere körperlich, Behinderte sind die bekannten Magazinwagen auf Grund der doch recht erklecklichen Anforderungen an körperlichen Krafteinsatz völlig ungeeignet und zwar auch dann wenn solche Magazinwagen in Bibliotheken zum Transport von druckschriftlichen Material eingesetzt werden soll.

Der Erfindung liegt daher die Aufgabe zugrunde einen selbstfahrenden Magazinwagen gemäß dem Oberbegriff des Anspruches derart auszubilden, daß er, insbesondere körperlich Behinderten, weitgehend unabhängig von der Art ihrer Behinderung ein Arbeiten in Magazinen oder auch in großen Bibliotheken ermöglicht und dabei so weit als möglich Unfallrisiken ausschließt.

Diese Aufgabe wird hinsichtlich der Wagenausbildung erfindungsgemäß durch die im Anspruch 1 angegebenen Merkmale gelöst.
Vorteilhafte Weiterbildungen und zweckmäßige Ausgestaltungsformen sind in den Unteransprüchen angegeben.
Eine solche Gestaltung eines Magazinwagens zeichnet sich zunächst dadurch aus, daß der Führer des Fahrzeuges die Ladefläche seines Fahrzeuges überblicken und daher sein Fahrzeug auch positionsgenau an die jeweilige Be-bzw. Entladestellung heranführen kann, wobei sich zudem aus der Anordnung der einzeln und voneinander unabhängigen antreibbaren Hinterräder der Vorteil einer extremen Wendigkeit des Wagens ergibt, so daß es für den Fahrer völlig unproblematisch ist die Ladefläche exakt zur Be-bzw. Entladestelle auszurichten. Dies insbesondere aufgrund der Tatsache, daß der erfindungsgemäße Einzelantrieb der Hinterräder auch ein Drehen des Wagens auf der stelle erlaubt, so daß Ausrichtmanöver auch unter räumlich beengten Verhältnissen problemlos ausgeführt werden können.

Eine im Hinblick auf eine einfache aber exakte Ausrichtbarkeit des Wagens gegenüber einer Be-oder Entladesstelle besonders vorteilhafte Anordnung der Räder des Wagens ergibt sich dabei daraus, daß die beiden Hinterräder im Bereich des hinteren Endes des Chassis, im Wesentlichen unterhalb des Fahrersitzes und das wenigstens eine Vorderrad im Bereich des dem Fahrersitz gegenüberliegenden vorderen Endes des Chassis, im Wesentlichen unterhalb der Ladefläche angeordnet sind Insbesondere ermöglicht diese Anordnung angetriebener und nicht angetriebener schwenkbarer Vorder-und Hinterräder ein Beischwenken der Ladefläche zur Be-bzw. Entladestelle bei mehr oder minder auf der Stelle drehendem Wagen.

Ein sanftes aber sicheres Abbremsen des Wagens und ein zielsicheres Beischwenken der Ladefläche des Wagens in eine zur Be-bzw. Entladestelle ausgerichtete Stellung selbst auf einem abschüssigem Untergrund, wie er sich in Magazinen, insbesondere infolge der Anordnung von Auf-bzw. Abfahrtsrampen des Öfteren findet, wird dem Fahrer dadurch ermöglicht, daß die Antriebsräder zusätzlich zur Ausstattung mit voneinander unabhängig ansteuerbaren, drehrichtungsumkehrbaren dynamo-elektrischen Radnabenmotoren auch noch mit voneinander unabhängig, einzeln betätigbaren mechanischen Bremsen ausgestattet sind.

Eine für körperlich behinderte Fahrer besonders einfach zu beherrschende Lenkbarkeit des Magazinwagens ergibt sich grundsätzlich daraus, daß die Lenkeinrichtung einen kardanisch aufgehängten Steuerknüppel und eine diesem zugeordnete, mit Sensoren zum Abgriff der Größe und der Richtung der Auslenkung des Steuerknüppels ausgestattete Abgriffseinrichtung umfaßt, wobei den Sensoren Regelschaltungen nachgeordnet sind, welche zumindest die Energiezufuhr zu jedem einzelnen der dynamo-elektrischen Radnabenmotoren entsprechend der Größe und Richtung der Steuerknüppelauslenkung auf-bzw. zuregeln. Damit kann der Fahrer mittels einer Einhandbedienung nicht nur von Vorwärts- auf Rückwärtsfahrt umschalten sondern auch praktisch jede beliebige Kurvenfahrt des Magazinwagens einsteuern. Zudem gewährleistet eine solcherart gestaltete Lenkeinrichtung auch das präzise Beischwenken der Ladefläche zu einer Be-bzw. Entladestelle. Ebenso ermöglicht dies dem Fahrer auch das problemlose Freikommen des Magazinwagens von der jeweiligen Beund Entladestelle, da der Wagen bei entsprechender Steuerknüppelstellung dank der Anordnung seiner einzeln antreibbaren Hinterräder im Bereich des hinteren Endes des Chassis bezüglich seines vorderen Endes auch auf der Stelle schwenken und damit in eine das Abfahren erleichternde Winkelstellung zur Be-bzw. Entladestelle verbracht werden kann, so daß ein Abfahren von der Be-bzw. Entladestelle völlig unproblematisch ist.

Hinsichtlich der Mittel bzw. Einrichtungen zum Umsetzen der Steuerknüppelstellung in Antriebsimpulse für die mit einzeln ansteuerbaren dynamo-elektrischen Motoren ausgestatteten Hinterräder kann an sich jede bekannte und geeignete Sensorik bzw. dieser nachgeschaltete Regelschaltung eingesetzt werden, wobei jedoch in einer bevorzugten Verwirklichungsweise vorgesehen ist,, daß die dem Steuerknüppel zugeordnete Sensorik als Wheatstone Brücke ausgebildet ist, in der Weise, daß ein richtungsunabhängig verformbares Element mit wenigstens vier Dehnungsmesstreifen bestückt und einerseits mit dem Steuerknüppel und andererseits mit einem feststehenden Teil der Steuerknüppelaufhängung verbunden ist.

Es kann aber auch vorgesehen sein, daß die dem Steuerknüppel zugeordnete Sensorik zwei kreuzdiagonal angeordnete Geberpotentiometer umfaßt. Darüber hinaus kann zur Ableitung einer Regelung der Energiezufuhr zu den dynamo-elektrischen Antriebsmotoren der Hinterräder aus der jeweiligen Steuerknüppelstellung auch jede andere geeignete und bekannte Sensorik eingesetzt werden.

Die Lenkbarkeit des Magazinwagens beruht im Wesentlichen darauf, daß die Hinterräder um starre Achsen rotierend angeordnet sind und eine Fahrtrichtungsänderung während der Fahrt bzw. eine Stellungsänderung im Stillstand des Magazinwagens durch ein aus einer Differenz der Drehzahl der Hinterräder resultierendes mehr oder minder gewaltsames Verschwenken des gesamten Chassis des Wagens um eine die Hinterradachse schneidende Hochachse bewerkstelligt wird, wobei zugleich auch den nicht gelenkten, schwenkbaren Vorderrädern ein Lenkeinschlag aufgezwungen wird.
Aus solchen ohne Rücksicht auf die jeweilige Fahrsituation gewaltsam herbeiführbaren Fahrtrichtungsänderungen des Wagens können im Extremfall Gefahren sowohl für den Wagen selbst als auch insbesondere auch für den ohnehin behinderten Fahrer resultieren. Insbesondere kann eine übermäßige Drehbeschleunigung im Bereich des Fahrersitzes zunächst zu Fehlbedienungen des Steuerknüppels führen. Während solche Fehlbetätigungen in den meisten Fällen noch durch eine entsprechende Reaktion des Fahrers noch ausgleichbar sind, ergibt sich bei überhöhten Kurvengeschwindigkeiten eine Kippgefahr für den Wagen an sich, welche auch durch relativ rasche Reaktionen des Fahrers nicht mehr ausgeglichen werden kann. In Vervollständigung der Erfindung ist daher vorgesehen, daß jedem der beiden antreibbaren Hinterräder eine Drehzahlerfassungseinrichtung zugeordnet ist und daß eine Drehzahlvergleichseinrichtung vorgesehen ist, welcher Drehzahlbegrenzungseinrichtung nachgeschaltet ist, welche unabhängig von der Stellung des Steuerknüppels lediglich in Abhängigkeit von einer höchstzulässigen Drehzahldifferenz die Energieversorgung der dynamo-elektrischen Radnabenmotoren eines der beiden Hinterräder verringert. Die Drehzahlbegrenzungseinrichtung enthält eine Tabelle für die in Abhängigkeit der jeweiligen Fahrgeschwindigkeit maximal zulässigen Drehzahldifferenzen, so daß die Energiezuführ für das entsprechend einer überzogenen Stellung des Steuerknüppels mit zu hoher Drehzahl angetriebene Hinterrad gedrosselt wird, sobald ein überzogener Fahrzustand festgestellt wird. Hierbei ist unter dem Begriff eines überzogenen Fahrzustandes beispielsweise ein bezüglich der Fahrgeschwindigkeit zu geringer Kurvenradius, und damit letztlich jeder Fahrzustand, welcher eine Kippgefahr des Fahrzeuges insgesamt beinhalten könnte, zu verstehen, ebenso wie zu schnelle Schwenkbewegungen, die eine zu große Drehbeschleunigung des Fahrers zur Folge haben.

In einer erweiterten insbesondere behindertengerechten Ausgestaltung der Lenkeinrichtung kann ferner eine Spurhalteeinrichtung vorgesehen sein, welche ein durch evtl. auch das einseitige Überlaufen von Fahrbahnunebenheiten oder durch das Überlaufen auf der Fahrbahn liegender Gegenstände hervorgerufenes unvorhersehbares Auslenkungen der um jeweils eine vertikale Achse frei pendelnd aufgehängten Vorderräder durch ein entsprechendes Gegensteuern des Antriebes der Hinterräder ausgleicht und somit eine Kurshaltesicherung bildet. Eine praktikable Verwirklichungsform einer den behinderten Fahrer entlastenden Kurshalteeinrichtung wird darin gesehen, daß in Verbindung mit jedem der beiden antreibbaren Hinterräder zugeordneten Drehzahlerfassungseinrichtungen eine Vergleichsschaltung vorgesehen ist, welche einerseits die Steuerknüppelstellung und andererseits auftretende Drehzahldifferenzen an den Hinterrädern miteinander vergleicht und die bei Auftreten einer von der Steuerknüppelstellung abweichenden Drehzahl der Hinterräder eine automatische Korrektur der Energieversorgung der Hinterräder bewirkt. Eine dieserart oder wie auch immer gestaltete Kurshalteeinrichtung ermöglicht die Anpassung der Lenkung des Magazinwagens an die durch eine körperliche Behinderung bedingte eingeschränkte Bedienmöglichkeit des Fahrers.

In weiterer Ausgestaltung der Bedienfreundlichkeit eines Magazinwagens kann ferner noch vorgesehen sein, daß die Abgriffseinrichtung zusätzliche Sensoren umfaßt, welche in Abhängigkeit von einer Steuerknüppelauslenkung den getrennten bzw. zusätzlichen Einsatz der Radbremsen steuern.

Es kann aber auch vorgesehen sein, daß anstelle eines durch eine zusätzliche Steuerknüppelstellung zuschaltbaren Einsatzes der Radbremsen ein zusätzlicher Steuerschalter bzw. ein Bremsbetätigungshebel für das gleichzeitige gemeinsame Einrücken der den beiden Hinterrädern zugeordneten Radbremsen vorgesehen ist. In einer abgewandelten Verwirklichungsform kann dabei aber auch vorgesehen sein, daß zwei zusätzliche Steuerschalter bzw. Bremsbetätigungshebel für ein willkürliches getrenntes Einrücken jeder einzelnen der jedem beiden Hinterrädern zugeordneten Radbremse vorhanden sind.

Eine besonders vorteilhafte bauliche Gestaltungsform des Magazinwagens wird weiterhin noch darin gesehen, daß ein ohnehin erforderlicher Batteriekasten im Heck des Chassis angeordnet ist und zugleich den Träger des Fahrersitzes bildet und daß ferner der Fahrersitz in der Draufsicht eine gerundete Grundrißfläche aufweist, derart, daß die vorzugsweise symmetrisch zur Wagenlängsachse angeordnete Abrundung des Fahrersitzes das Einsteigen von jeder der beiden Längsseiten des Wagens her erleichtert.

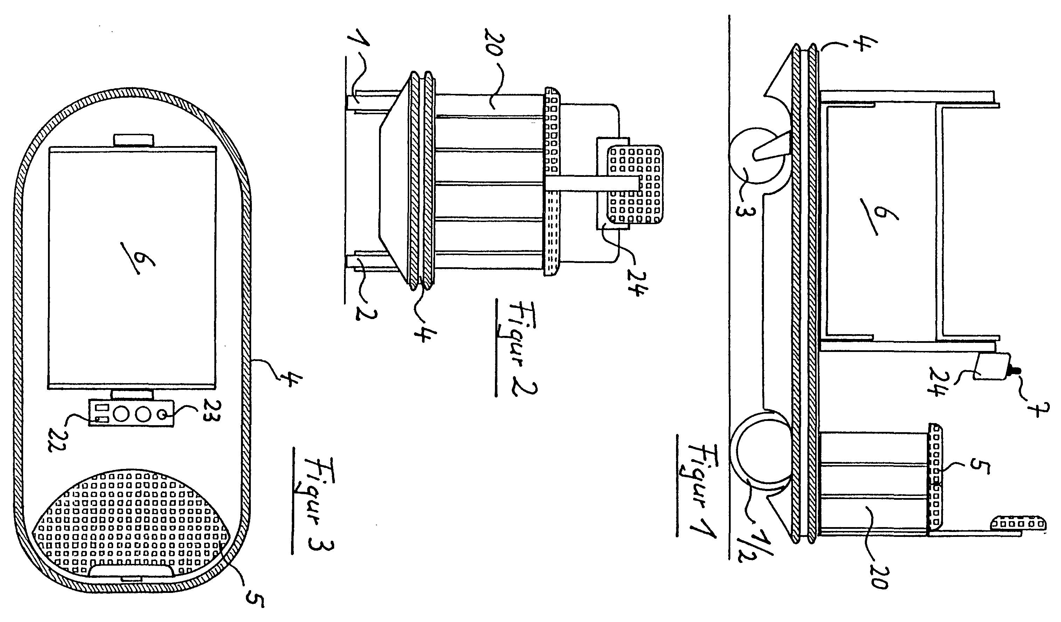

Die Erfindung ist in der nachfolgenden Beispielsbeschreibung anhand eines in der Zeichnung dargestellten Ausführungsbeispieles im Einzelnen beschrieben. In der Zeichnung zeigt die
- Figur 1: eine Seitenansicht eines Magazinwagens;
- Figur 2: eine Rückansicht eines Magazinwagens nach Figur 1;
- Figur 3: eine Draufsicht auf einen Magazinwagen nach Figur 1 und 2;

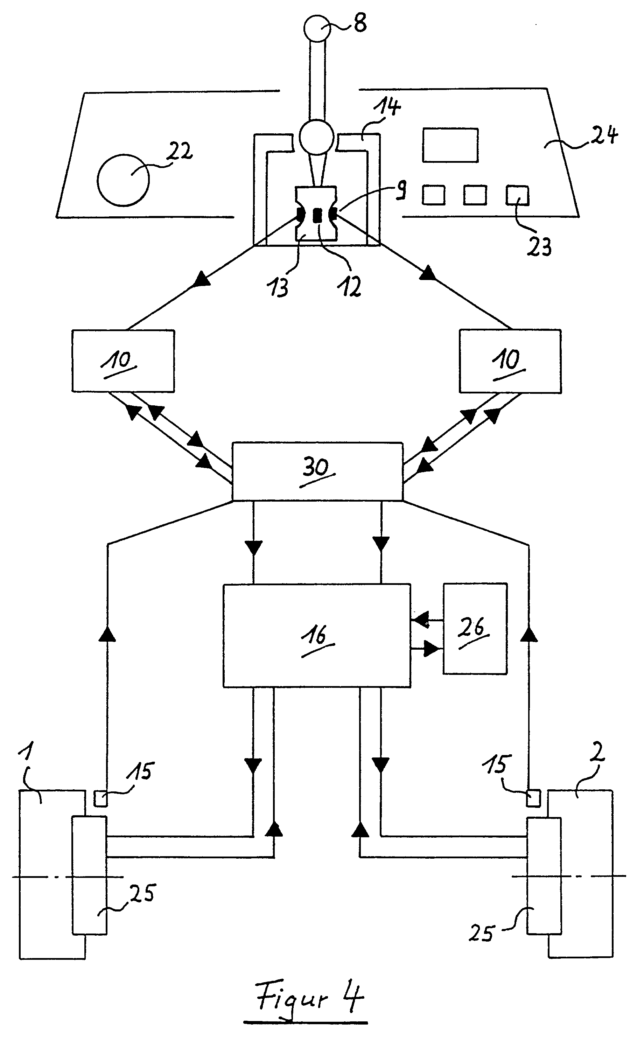

- Figur 4: eine Einzeldarstellung des Steuerknüppels samt Blockdarstellung der nachgeschalteten Regeleinrichtungen.

Der im Ausführungsbeispiel dargestellte, behindertengerechte und selbstfahrende Magazinwagen weist ein über wenigstens drei Räder 1,2 und 3 gegen den Boden abgestützten Chassis 4, einen Fahrersitz 5, eine Ladefläche 6 und eine Lenkeinrichtung 7 sowie einen elektrischen Antrieb auf.
Der Fahrersitz 5 ist dabei in Vorwärtsfahrtrichtung gesehen hinter der Ladeplattform 6 plaziert. Die beiden die Hinterachse bildenden Räder 1 und 2 sind jeweils um starre Achsen rotierbar am Chassis 4 gelagert. Ferner ist jedes der beiden Hinterräder 1 und 2 mit einem unabhängig antreib-und abbremsbaren dynamo-elektrischen Motor ausgestattet. Eine Vorderachse des Wagens besteht aus wenigstens einem um eine vertikale Achse schwenkbaren Vorderrad 3 umfaßt, wobei die Vorderräder 3 um eine vertikale Achse frei drehbar am Chassis 4 aufgehängt sind. Zwischen der Lenkeinrichtung 7 und den Rädern 1 bis 3 keine mechanische Verbindung. Eine im Hinblick auf eine einfache aber exakte Ausrichtbarkeit des Wagens gegenüber einer Be-oder Entladesstelle besonders vorteilhafte Anordnung der Räder des Wagens ergibt sich dabei daraus, daß die beiden Hinterräder im Bereich des hinteren Endes des Chassis, im Wesentlichen unterhalb des Fahrersitzes und das wenigstens eine Vorderrad im Bereich des dem Fahrersitz gegenüberliegenden vorderen Endes des Chassis, im Wesentlichen unterhalb der Ladefläche angeordnet sind Insbesondere ermöglicht diese Anordnung angetriebener und nicht angetriebener schwenkbarer Vorder-und Hinterräder ein Beischwenken der Ladefläche zur Be-bzw. Entladestelle bei mehr oder minder auf der Stelle drehendem Wagen.

Die Lenkeinrichtung 7 umfaßt einen innerhalb eines mit Instrumenten 22 und schaltern 23 ausgestatteten Armaturenbrettes 24 kardanisch aufgehängten Steuerknüppel 8 und eine diesem zugeordnete, mit Sensoren 9 zum Abgriff der Größe und der Richtung der Auslenkung des Steuerknüppels 8 ausgestattete Abgriffseinrichtung 10, wobei den Sensoren 9 Regelschaltungen 10 sowie ein Zentralcomputer 30 nachgeordnet sind, welche zumindest die Energiezufuhr zu jedem einzelnen der dynamo-elektrischen Radnabenmotoren 25 entsprechend der Größe und Richtung der Steuerknüppelauslenkung auf-bzw. zuregeln.

Die dem Steuerknüppel zugeordnete Sensorik 9 ist als Wheatstone Brücke ausgebildet und besteht aus vier Dehnungsmesstreifen 12, die an einem richtungsunabhängig verformbaren Element 13 angeordnet sind, wobei das richtungsunabhängig verformbare Element 13 einerseits mit dem Steuerknüppel 8 und andererseits mit einem feststehenden Teil 14 der Steuerknüppelaufhängung verbunden ist. Die von den Dehnungsmesstreifen 13 ermittelten Stellungssignale für die jeweilige Stellung des Steuerknüppels 8 werden in den Abgriffseinrichtungen 10 in für den Zentralcomputer 30 verwertbare Signale umgewandelt. Der Zentralcomputer 30 vergleicht die eingehenden Signale einerseits von den Abgriffseinrichtungen 10 und andereseits von den Drehzahlerfassungseinrichtungen 15 mit abgelegten Vorgaben und gibt seinerseits Steuersignale für die Energieversorgung der Radnabenmotoren 25 aus. Der Energieversorgung der der dynamo-elektrischen Radnabenmotoren 25 ist ein Batteriesatz 26 zugeordnet.

Jedem der beiden antreibbaren Hinterräder 1 und 2 ist ferner eine Drehzahlerfassungseinrichtung 15 zugeordnet welcher eine Drehzahlbegrenzungseinrichtung 16 nachgeschaltet ist, welche ihrerseits unabhängig von der Stellung des Steuerknüppels 8 lediglich in Abhängigkeit von einer höchstzulässigen Drehzahldifferenz zwischen den beiden Hinterrädern 1 und 2 die Energieversorgung der dynamo-elektrischen Radnabenmotoren regelt, in der Weise, daß die Energiezufuhr zu dem mit zu hoher Drehzahl angetriebene Hinterrad gedrosselt wird, sobald ein überzogener Fahrzustand festgestellt wird.

Aus der Zeichnung ist weiterhin ersichtlich, ein ohnehin erforderlicher Batteriekasten 20 im Heck des Chassis 4 angeordnet ist und zugleich den Träger des Fahrersitzes 5 bildet und daß der Fahrersitz 5 in der Draufsicht eine gerundete Grundrißfläche aufweist, derart, daß die vorzugsweise symmetrisch zur Wagenlängsachse angeordnete Abrundung des Fahrersitzes 5 das Einsteigen von jeder der beiden Längsseiten des Wagens her erleichtert.

## Patentansprüche

1. Behindertengerechter selbstfahrender Magazinwagen mit einem über wenigstens drei Räder (1,2 und 3), insbesondere wenigstens einem eine um eine vertikale Achse schwenkbaren Vorderrad (3) und zwei starr angeordnete, über jeweils einen Elektromotor (25) antreibbare sowie über eine mechanische Bremseinrichtung- abbremsbare Hinterräder (1 und 2) gegen den Boden abgestützten Chassis (4), einem Fahrersitz (5) und eine Lenkeinrichtung (7) wobei keine mechanische Verbindung zwischen der Lenkeinrichtung (7) und einem der Räder (1,2 und 3) besteht,
**dadurch gekennzeichnet,**
**daß** bei einem mit einer Ladeplattform (6) ausgestatteten Chassis (4) der Fahrersitz (5) in Vorwärtsfahrtrichtung gesehen hinter der Ladeplattform (6) plaziert ist und die Antriebsräder (1 und 2) mit vermittels eines Steuerknüppels (8) voneinander unabhängig ansteuerbaren, drehrichtungsumkehrbaren dynamo-elektrischen Radnabenmotoren (25) und mittels einer vom Steuerknüppel (8) unabhängigen Betätigungseinrichtung (22) voneinander unabhängig, einzeln betätigbaren mechanischen Bremsen ausgestattet sind.

2. Magazinwagen nach Anspruch 1, **dadurch gekennzeichnet, daß** die Lenkeinrichtung (7) einen kardanisch aufgehängten Steuerknüppel (8) und eine diesem zugeordnete, mit Sensoren (9) zum Abgriff der Größe und der Richtung der Auslenkung des Steuerknüppels (8) ausgestattete Abgriffseinrichtung (10) umfaßt, wobei den Sensoren (9) Regelschaltungen nachgeordnet sind, welche zumindest die Energiezufuhr zu jedem einzelnen der dynamo-elektrischen Radnabenmotoren (25) entsprechend der Größe und Richtung der Steuerknüppelauslenkung auf-bzw. zuregeln.

3. Magazinwagen nach Anspruch 1 und 2, **dadurch gekennzeichnet, daß** die dem Steuerknüppel (8) zugeordnete Sensorik als Wheatstone Brücke ausgebildet ist, in der Weise, daß ein richtungsunabhängig verformbares Element mit wenigstens vier Dehnungsmeßstreifen (12) bestückt und einerseits mit dem Steuerknüppel (8) und andererseits mit einem feststehenden Teil (14) der Steuerknüppelaufhängung verbunden ist.

4. Magazinwagen nach Anspruch 1 und 2, **dadurch gekennzeichnet, daß** die dem Steuerknüppel (8) zugeordnete Sensorik (9) zwei kreuzdiagonal angeordnete Geberpotentiometer umfaßt.

5. Magazinwagen nach einem der Ansprüche 1 bis 4, **dadurch gekennzeichnet, daß** jedem der beiden antreibbaren Hinterräder (1 bzw. 2) eine Drehzahlerfassungseinrichtung (15) zugeordnet ist und daß eine Drehzahlbegrenzungseinrichtung (16) vorgesehen ist, welche die Energieversorgung der dynamo-elektrischen Radnabenmotoren (25) jedes der beiden Hinterräder (1 und 2) in Abhängigkeit von einer höchstzulässigen Drehzahldifferenz verlingert.

6. Magazinwagen nach einem der Ansprüche 1 bis 5, **dadurch gekennzeichnet, daß** in Verbindung mit jedem der beiden antreibbaren Hinterräder (1 und 2) zugeordneten Drehzahlerfassungseinrichtungen (15) eine Vergleichsschaltung vorgesehen ist, welche einerseits die Steuerknüppelstellung und andererseits auftretende Drehzahldifferenzen an den Hinterrädern (1 und 2) miteinander vergleicht und die bei Auftreten einer von der Steuerknüppelstellung abweichenden Drehzahl der Hinterräder (1 und 2) eine automatische Korrektur der Energieversorgung der Hinterräder (1 und 2) bewirkt.

7. Magazinwagen nach einem der Ansprüche 1 bis 6, **dadurch gekennzeichnet, daß** die Abgriffseinrichtung (10) zusätzliche Sensoren umfaßt, welche in Abhängigkeit von einer Steuerknüppelauslenkung den getrennten bzw. zusätzlichen Einsatz der Radbremsen steuern.

8. Magazinwagen nach einem der Ansprüche 1 bis 6, **dadurch gekennzeichnet, daß** ein zusätzlicher Steuerschalter (23) bzw. ein Bremsbetätigungshebel für das gleichzeitige gemeinsame Einrücken der den beiden Hinterrädern (1 und 2) zugeordneten Radbremsen vorgesehen ist.

9. Magazinwagen nach einem der Ansprüche 1 bis 6, **dadurch gekennzeichnet, daß** zwei zusätzliche Steuerschalter (22) bzw. Bremsbetätigungshebel für ein willkürliches getrenntes Einrücken der jedem beiden Hinterrädern (1 und 2) zugeordneten Radbremsen vorgesehen sind.

10. Magazinwagen nach einem der Ansprüche 1 bis 9, **dadurch gekennzeichnet, daß** ein im Heck des Chassis angeordneter Batteriekasten (26) den Träger des Fahrersitzes (5) bildet.

11. Magazinwagen nach einem der Ansprüche 1 bis 10, **dadurch gekennzeichnet, daß** der Fahrersitz (5) in der Draufsicht eine gerundete Grundrißfläche aufweist.

12. Magazinwagen nach einem der Ansprüche 1 (bis 11), **dadurch gekennzeichnet, daß** das Chassis (4) eine weitgehend kreisrunde Ausbildung seiner Stirnenden aufweist und daß die beiden Hinterräder (1 uns 2) im Bereich des hinteren Endes des Chassis (4), im Wesentlichen unterhalb des Fahrersitzes (5) und das wenigstens eine Vorderrad (3) im Bereich des dem Fahrersitz gegenüberliegenden vorderen Endes des Chassis (4), im Wesentlichen unterhalb der Ladeplattform (6) angeordnet sind

## Claims

1. Disabled person's automotive shopping cart with a chassis (4) supported toward the base via at least three wheels (1, 2 and 3), in particular at least one front wheel (3) which can be pivoted about a vertical axis and two rigidly arranged rear wheels (1 and 2) which can be driven via a respective electric motor (25) and can be braked via a mechanical braking device, a driver's seat (5) and a steering device (7), there being no mechanical connection between the steering device (7) and any of the wheels (1, 2 and 3), **characterised in that** in the case of a chassis (4) equipped with a loading platform (6), the driver's seat (5) is positioned behind the loading platform (6) viewed in the forward travel direction, and the drive wheels (1 and 2) are equipped with dynamo-electric wheel hub motors (25), the rotary direction of which can be reversed, which can be controlled independently of one another by means of a control column (8), and with mechanical brakes which can be individually actuated independently of one another by means of an actuating device (22) which is independent of the control column (8).

2. Shopping cart according to claim 1, **characterised in that** the steering device (7) comprises a control column (8) which is mounted on gimbals and a sensing device (10) associated therewith equipped with sensors (9) for sensing the size and direction of the excursion of the control column (8), the sensors (9) being connected downstream from control circuits which at least adjust the energy supply to each individual dynamo-electric wheel hub motor (25) according to the size and direction of the steering column excursion.

3. Shopping cart according to claim 1 and 2, **characterised in that** the sensory mechanism associated with the control column (8) is configured as a Wheatstone bridge such that an element which can be deformed independently of direction is fitted with at least four wire strain gauges (12) and, on the one hand, is connected to the control column (8) and, on the other hand, to a stationary part (14) of the steering column mounting.

4. Shopping cart according to claim 1 and 2, **characterised in that** the sensory mechanism (9) associated with the steering column (8) comprises two cross-diagonally arranged sensor potentiometers.

5. Shopping cart according to any one of claims 1 to 4, **characterised in that** a speed measurement device (15) is associated with each of the two drivable rear wheels (1 and 2) and **in that** a speed limitation device (16) is provided, reducing the energy supply of the dynamo-electric wheel hub motors (25) of each of the two rear wheels (1 and 2) as a function of the greatest admissible speed difference.

6. Shopping cart according to any one of claims 1 to 5, **characterised in that** provided in connection with speed measurement devices (15) associated with each of the two drivable rear wheels (1 and 2) is a comparator circuit, on the one hand comparing the control column position and, on the other hand, speed differences occurring at the rear wheels (1 and 2) and bringing about an automatic correction in the energy supply to the rear wheels (1 and 2) if the speed of the rear wheels (1 and 2) deviates from the position of the steering column.

7. Shopping cart according to any one of claims 1 to 6, **characterised in that** the sensing device (10) comprises additional sensors controlling the separate or additional use of the wheel brakes as a function of a steering column excursion.

8. Shopping cart according to any one of claims 1 to 6, **characterised in that** an additional control switch (23) or a brake actuation lever for simultaneous common engagement of the wheel brakes associated with the two rear wheels (1 and 2), is provided.

9. Shopping cart according to any one of claims 1 to 6, **characterised in that** two additional control switches (22) or brake actuating levers are provided for arbitrary separate engagement of the wheel brakes associated with each of the rear wheels (1 and 2).

10. Shopping cart according to any one of claims 1 to 9, **characterised in that** a battery box (26) arranged in the rear of the chassis forms the carrier of the driver's seat (5).

11. Shopping cart according to any one of claims 1 to 10, **characterised in that** the driver's seat (5) in plan view has a rounded plan area.

12. Shopping cart according to any one of claims 1 to 11, **characterised in that** the chassis (4) has a substantially circular configuration of its end faces and **in that** the two rear wheels (1 and 2) are arranged in the region of the rear end of the chassis (4), substantially below the driver's seat (5) and the at least one front wheel (3) is arranged in the region of the leading end of the chassis (4) remote from the driver's seat, substantially underneath the loading platform (6).

## Revendications

1. Chariot de manutention automoteur adapté aux handicapés, qui comporte un châssis (4) prenant appui sur le sol par l'intermédiaire d'au moins trois roues (1), (2), (3), en particulier d'au moins une roue avant (3) orientable autour d'un axe vertical et de deux roues arrière (1), (2) rigides, entraînées chacune par un moteur électrique (25) et pouvant être freinées par un dispositif de freinage mécanique, et, qui comporte également un siège de conducteur (5) et un dispositif de guidage (7), aucune liaison mécanique n'étant prévue entre le dispositif de guidage (7) et les roues (1), (2), (3), **caractérisé en ce que** le siège de conducteur (5) est disposé, dans le sens de la marche avant, derrière la plate-forme de chargement (6) dont est équipé le châssis et **en ce que** les roues motrices (1), (2) sont équipées chacune sur le moyeu de roue d'un moteur (25) dynamo-électrique à sens de rotation inversable, les moteurs pouvant être commandés indépendamment l'un de l'autre par un levier de commande (8), et, d'un frein mécanique, les freins mécaniques étant indépendants l'un de l'autre et pouvant être actionnés séparément par un dispositif de manoeuvre indépendant du levier de commande (8).

2. Chariot de manutention selon la revendication 1 **caractérisé en ce que** le dispositif de guidage (7) comprend un levier de commande (8) suspendu à la cardan et un dispositif (10) coopérant avec ledit levier de commande et équipé de palpeurs (9) pour mesurer l'ampleur et la direction de déviation du levier de commande (8) et **en ce que** des circuits de réglage disposés derrière lesdits palpeurs contrôlent l'alimentation en énergie de chacun des moteurs dynamo-électriques sur le moyeu de roue (25) en fonction de l'ampleur et de la direction de la déviation du levier de commande (8).

3. Chariot de manutention selon les revendications 1 et 2 **caractérisé en ce que** le dispositif d'analyse sensorielle (9) associé au levier de commande (8) est constitué d'un pont de Wheatstone de manière qu'un élément déformable en toutes directions et équipé d'au moins quatre jauges de contrainte (12) soit relié d'une part au levier de commande (8) et d'autre part à une partie fixe (14) de la suspension du levier de commande.

4. Chariot de manutention selon les revendications 1 et 2 **caractérisé en ce que** le dispositif d'analyse sensorielle (9) associé au levier de commande (8) comporte deux potentiomètres à la Gerber disposés en croix et en diagonale.

5. Chariot de manutention selon l'une des revendications 1 à 4 **caractérisé en ce que** un compte-tours (15) est associé à chacune des roues arrière motrices (1), (2) et **en ce que** un limiteur du nombre de tours (16) réduit l'alimentation en énergie des moteurs dynamo-électriques (25) sur le moyeu de roue des roues arrière (1), (2) en fonction de la différence maximale admissible entre les nombres de tours.

6. Chariot de manutention selon l'une des revendications 1 à 5 **caractérisé en ce que** chacun des compte-tours (15) coopérant avec les roues arrière motrices (1), (2) est associé à un circuit de comparaison qui compare la position du levier de commande avec la différence du nombre de tours des roues arrière (1), (2) et qui provoque une correction automatique de l'énergie alimentant les roues arrière (1), (2) en cas d'écart du nombre de tours des roues arrière (1), (2) de la position du levier de commande (8).

7. Chariot de manutention selon l'une des revendications 1 à 6 **caractérisé en ce que** le dispositif de mesure (10) comporte des palpeurs supplémentaires qui guident l'utilisation séparée, respectivement additionnelle, des freins de roue en fonction de la déviation du levier de commande (8).

8. Chariot de manutention selon l'une des revendications 1 à 6 **caractérisé par** un commutateur de commande (23), respectivement un levier de commande additionnel destiné à l'embrayage simultané et commun des freins associés aux roues arrière motrices (1), (2).

9. Chariot de manutention selon l'une des revendications 1 à 6 **caractérisé par** deux commutateurs de commande (22), respectivement deux leviers de commande additionnels destinés à l'embrayage intentionnel et séparé des freins associés aux roues arrière motrices (1), (2).

10. Chariot de manutention selon l'une des revendications 1 à 9 **caractérisé en ce que** un coffret de batteries (26) disposé à l'arrière du châssis (4) sert de support du siège de conducteur (5).

11. Chariot de manutention selon l'une des revendications 1 à 10 **caractérisé en ce que** le siège de conducteur (5) présente, vu de dessus, une surface de base de forme arrondie.

12. Chariot de manutention selon l'une des revendications 1 à 11 **caractérisé en ce que** les extrémités frontales du châssis (4) présentent une forme sensiblement ronde, **en ce que** les deux roues arrière (1), (2) sont disposées dans la zone de l'extrémité arrière du châssis (4), sensiblement sous le siège de conducteur (5) et **en ce que** au moins une roue avant (3) est disposée dans la zone de l'extrémité avant du châssis (4) opposée au siège du conducteur, sensiblement sous la surface de chargement (6).
